(19) Europäisches Patentamt

European Patent Office

Office européen des brevets

(11) Veröffentlichungsnummer : **0 380 738 B1**

(12) **EUROPÄISCHE PATENTSCHRIFT**

(45) Veröffentlichungstag der Patentschrift :
**20.05.92 Patentblatt 92/21**

(51) Int. Cl.⁵ : **C02F 3/20, A01K 63/04**

(21) Anmeldenummer : **89110845.8**

(22) Anmeldetag : **15.06.89**

(54) **Belüftungssystem für ein flüssigkeitsgefülltes Becken.**

(30) Priorität : **31.01.89 DE 3902763**

(43) Veröffentlichungstag der Anmeldung :
**08.08.90 Patentblatt 90/32**

(45) Bekanntmachung des Hinweises auf die
Patenterteilung :
**20.05.92 Patentblatt 92/21**

(84) Benannte Vertragsstaaten :
**AT BE CH DE ES FR GB GR IT LI LU NL SE**

(56) Entgegenhaltungen :
**DE-A- 3 627 665**
**US-A- 3 880 965**

(73) Patentinhaber : **METZ MANNHEIM GMBH**
**Friedrich-Engelhorn-Strasse 5-9**
**W-6800 Mannheim 1 (DE)**

(72) Erfinder : **Götz, Helmut**
**Ahornweg 7**
**W-5455 Regensdorf (DE)**
Erfinder : **Scheibinger, Ludwig**
**Alfonsstrasse 7a**
**W-8000 München (DE)**
Erfinder : **Steinbach, Peter**
**Neugasse 23d**
**W-6701 Kallstadt (DE)**

(74) Vertreter : **Meyer-Roedern, Giso, Dr.**
**Bergheimer Strasse 10-12**
**W-6900 Heidelberg 1 (DE)**

EP 0 380 738 B1

## Beschreibung

Die Erfindung betrifft ein Belüftungssystem für ein flüssigkeitsgefülltes Becken nach dem Oberbegriff des Patentanspruchs 1.

Nach dem Stand der Technik sind für flüssigkeitsgefüllte Becken diverse Belüfter bekannt, die einen im Aufbau recht komplizierten Belüftungskörper haben. Mit dem Anschluß des Belüftungskörpers geht ein hoher Installationsaufwand und eine platzaufwendige Leitungsführung einher. Ein weiterer Nachteil ist, daß sich Wartung, Reparatur und Ersatz von Komponenten des Belüftungssystems sehr kompliziert und arbeitsaufwendig gestalten.

In der DE-OS 36 27 655.0-23 ist ein verbessertes Belüftungssystem der genannten Art beschrieben, bei dem ein Belüftungsschlauch in einer unterhalb des Flüssigkeitsspiegels fest installierten, oben offenen U-Profilführung verlegt und durch die U-Öffnung übergreifende Bügel niedergehalten ist. Der Schlauch ist mit Vorspannung in die U-Profilführung eingezogen.

Das Vorspannen des Belüftungsschlauchs hat sich in der Praxis nicht bewährt. Das in der DE-OS 36 27 665.0-23 beschriebene Konzept, durch Variieren der Vorspannung und der resultierenden Längendehnung eine Reinigung der Perforation des Belüftungsschlauchs von Ablagerungen, Verstopfungen usw. zu bewirken, ist nicht funktionstüchtig, da problematische Ablagerungen auf diese Art und Weise nicht entfernt werden. Die hohe Vorspannung des Schlauchs, die mit beträchtlichem apparativem Aufwand bereitgestellt werden muß, führt im Dauerbetrieb zu einer plastischen Verformung des Schlauchs, die dazu zwingt, ihn immer wieder zu kürzen, bis schließlich das Material nach relativ kurzer Betriebslebensdauer erschöpft ist. Die Löcher der Perforation werden durch die Vorspannung aufgeweitet, was einen unerwünscht vermehrten Wassereintritt in den Belüftungsschlauch zur Folge hat, wenn der darin herrschende Luftdruck abfällt. Auch werden durch die Erweiterung der Löcher die Luftblasen größer, so daß die Sauerstoffausnutzung schlechter wird; die Wirkung der Belüftung läßt nach.

Aufgabe der Erfindung ist, ein im Aufbau unaufwendiges, wartungsfreundliches Belüftungssystem der genannten Art zu schaffen, bei dem ein Belüftungsschlauch ohne Vorspannung verlegt und demzufolge eine geringere Materialbelastung, eine höhere Betriebslebensdauer, eine bessere Sauerstoffausnutzung und ein verminderter Wassereintritt erreicht werden können.

Diese Aufgabe wird durch das in Patentanspruch 1 gekennzeichnete Belüftungssystem gelöst.

Bei einer bevorzugten Ausführungsform ist eine Führungsschiene unterhalb des Schlauchs vorgesehen. Dadurch wird ein kompakter Aufbau erreicht. Insbesondere ist es möglich, Belüftungsschläuche auf gleicher Höhe unmittelbar nebeneinander zu verlegen.

Es ist aber auch eine Anordnung möglich, bei der sich zwei Führungsschienen beidseitig des Schlauchs befinden. Das ist bevorzugt, wenn die zur Verfügung stehende Bauhöhe gering ist.

Die oder eine jede Führungsschiene kann ein Hohlprofil mit einem in Schienenlängsrichtung verlaufenden Schlitz aufweisen. Zu jeder Halterung gehört dann ein in der Profilöffnung des Hohlprofils längsbeweglich aufgenommener Läufer (Gleiter oder Rolle), der mit der Halterung über ein durch den Schlitz hindurchragendes Verbindungsteil verbunden ist. Diese Anordnung zeichnet sich durch einen einfachen Aufbau und eine reibungsarme Führung aus. Alternativ ist die oder eine jede Führungsschiene ein T-Profil oder Rundprofil, auf dem mit den Halterungen verbundene Läufer längsbeweglich sitzen.

Die Halterungen sind vorzugsweise Ringe, in die der Belüftungsschlauch mit seiner Unterseite eingeklebt oder eingeschweißt ist. Der Belüftungsschlauch ist dadurch in der gewünschten Weise von unten gehalten. Ein in sich geschlossener Ringkörper ist für die Halterung wegen herstellungs- und montagetechnischer Vorteile sowie aus Stabilitätsgründen bevorzugt.

Ein Ende des Schlauchs kann mit einem vorzugsweise an der Führungsschiene geführten Endformstück verbunden sein, an dem das Zugmittel auf Höhe der Schlauchachse angreift. Beim Einziehen des Schlauchs wird die Zugkraft unmittelbar auf den Schlauchkörper, und nicht im Bereich der Führungsschiene eingeleitet. Das kann es erforderlich machen, in Krümmungsbereichen der Schlauchbahn, in denen die Schlauchabschnitte zwischen den Halterungen von der Führungsschiene abzuheben tendieren, wenigstens ein zusätzliches Führungselement anzuordnen, gegen das sich der Schlauch beim Einziehen anlegt. Häufig wird die Führungsschiene einen mit starkem Gefälle verlegten Einlaufabschnitt haben, der über einen Bogen in einen Horizontalabschnitt übergeht. Es kann sich dann ein zusätzliches Führungselement beispielsweise in Form einer Rolle vor diesem Bogen befinden, damit trotz einigen Abstands zwischen den Halterungen stets eine ausreichende Komponente der Zugkraft in Führungsschienenlängsrichtung wirkt.

Selbstverständlich besteht auch die Möglichkeit, die Zugkraft im Bereich der Führungsschiene einzuleiten, z.B. durch ein in der Führungsschiene laufendes Zugmittel, welches die Halterungen miteinander verbindet.

Zwischen Abschnitten des Schlauchs können ein oder mehrere in der Schlauchbahn liegende, vorzugsweise an der Führungsschiene geführte Zwischenformstücke eingeschaltet sein, insbesondere in Form von Winkelstücken oder Bogen. Diese dienen zur Stabilisierung des Schlauchs. Sie erlauben es, den Schlauch in relativ scharfen Krümmungen zu verlegen, ohne den Leitungsquerschnitt zu beeinträchtigen.

Bei einer bevorzugten Ausführungsform des erfindungsgemäßen Belüftungssystems sind sowohl der Einlaufabschnitt, als auch der Horizontalabschnitt der Führungsschiene gerade. Die Abschnitte gehen über einen Bogen ineinander über, in dessen Bereich sich bei eingezogenem Schlauch an der Führungsschiene geführte Zwischenformstücke befinden. An einem unteren Zwischenformstück ist ein Anschlag vorgesehen, der mit einem stationären Gegenanschlag als Festpunkt wirkt. Durch diese Maßnahme wird sichergestellt, daß der Schlauch in der Horizontale zwischen dem unteren Zwischenformstück (Festpunkt) und dem Endformstück, an dem das Zugmittel angreift, straff gezogen werden kann, worauf das Zugmittel ebenfalls Festpunkt ist.

Vorzugsweise ist allein der Schlauchabschnitt zwischen dem unteren Zwischenformstück und dem Endformstück durch Perforation als Belüftungsschlauch ausgebildet, während die entlang des Bogens und des Einlaufabschnitts der Führungsschiene sich erstreckende Schlauchpartie als Versorgungsschlauch dient.

Das erfindungsgemäße Belüftungssystem kann mehrere, vorzugsweise parallele Führungsschienen und daran geführte Schläuche enthalten, die jeweils mit einem separaten Zugmittel verbunden sein sollten. Man kann sich so der gewünschten Belüftungskapazität in weiten Grenzen anpassen und hat überdies den Vorteil, daß die Schläuche unter der Flüssigkeit einzeln eingezogen, zu Wartungszwecken demontiert und gegebenenfalls ersetzt werden können, während das Belüftungssystem insgesamt funktionstüchtig bleibt.

Die Erfindung wird im folgenden anhand eines in den Zeichnungen dargestellten Ausführungsbeispiels näher erläutert. Es zeigen:

Fig. 1 die Seitenansicht eines erfindungsgemäßen Belüftungssystems mit mehreren schienengeführten Belüftungsschläuchen;

Fig. 2 einen Schnitt durch eine Halterung der Belüftungsschläuche mit zugehöriger Führungsschiene nach II - II von Fig. 1;

Fig. 3 und Fig. 4 alternative Gestaltungen der Führungsschiene;

Fig. 5 eine Fig. 1 entsprechende schematische Darstellung, die die Abstützung eines Belüftungsschlauchs an einer Rolle während des Einziehens zeigt; und

Fig. 6 eine Vorderansicht des Belüftungssystems nach VI - VI von Fig. 1.

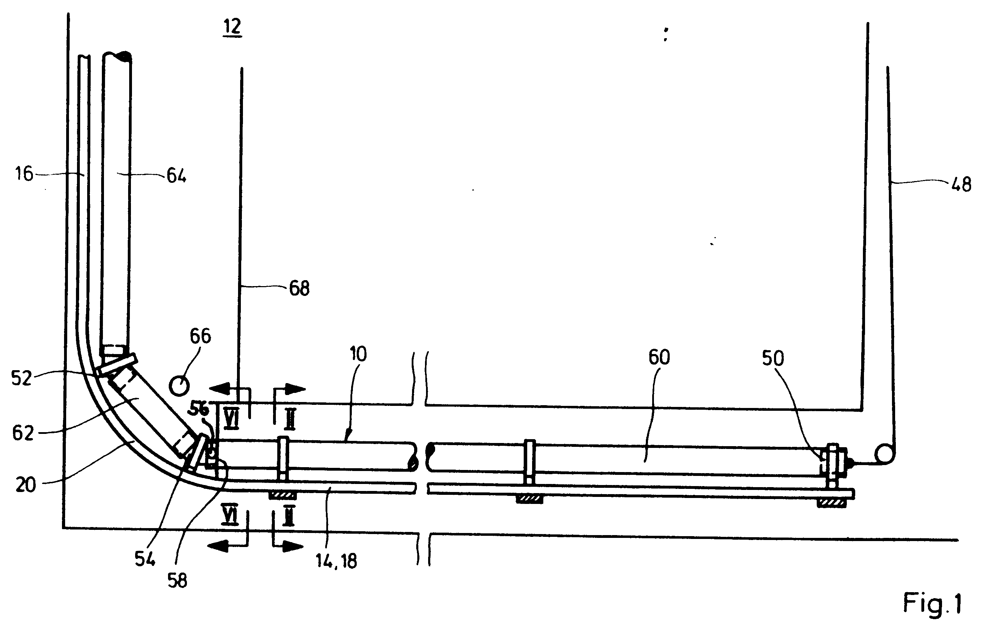

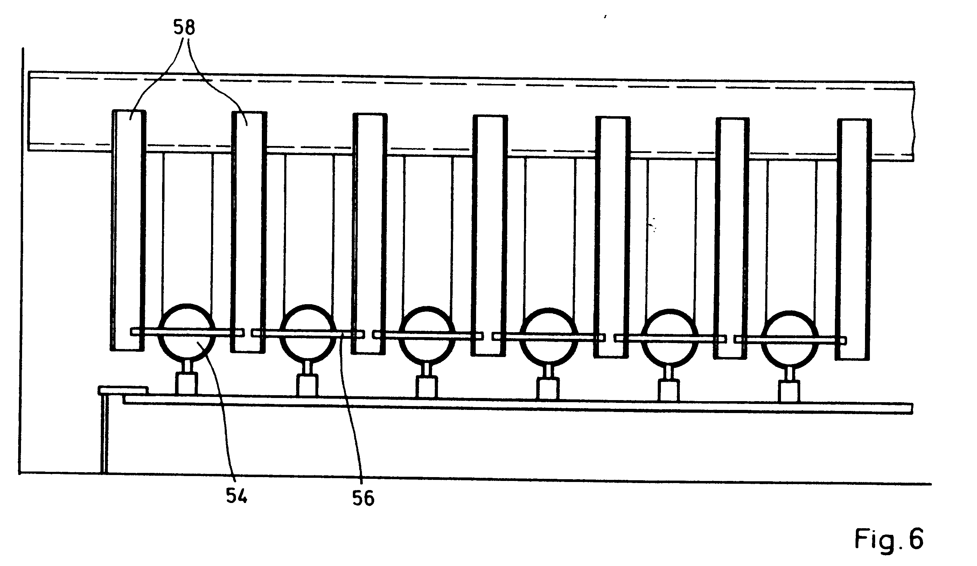

Zu dem erfindungsgemäßen Belüftungssystem gehören mehrere, in der Zeichnung sechs schienengeführte Belüftungsschläuche 10, die parallel und in Blickrichtung von Fig. 1 hintereinander in einem flüssigkeitsgefüllten Becken 12 angeordnet sind. Die Mehrfachanordnung der Schläuche 10 wird in Fig. 6 deutlich. Zu jedem Schlauch 10 gehört eine fest in dem Becken 12 installierte Führungsschiene 14, die einen vertikalen Einlaufabschnitt 16 und einen sich parallel zu dem Beckenboden erstreckenden längeren Horizontalabschnitt 18 aufweist. Die Abschnitte 16, 18 sind über einen 90°- Bogen 20 miteinander verbunden.

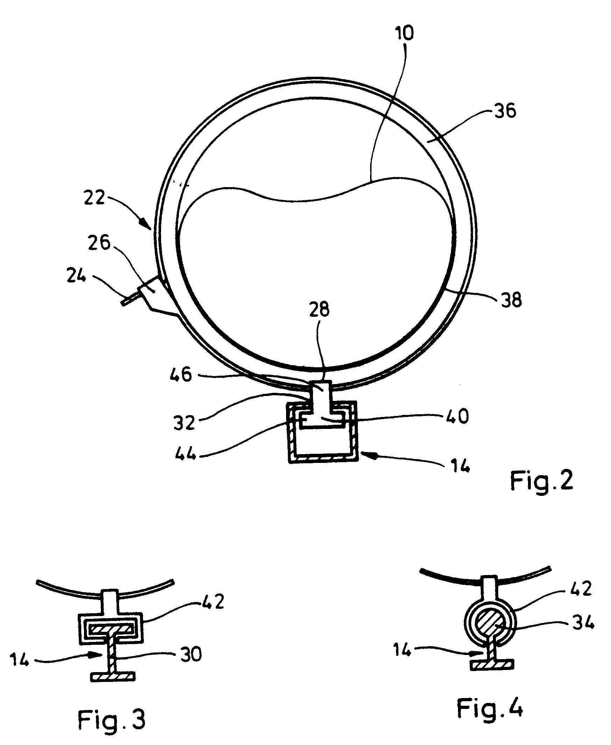

Gemäß Fig. 2 haben die Führungsschienen 14 ein Rechteckprofil mit einem in der Mitte des Profils verlaufenden oberen Längsschlitz 32. An den Führungsschinen 14 laufen mit dem Schlauch verbundene Halterungen, zu denen ein Ring 36 gehört, der den Schlauch 10 passend umschließt. Der Schlauch 10 ist in den Ring 36 eingeklebt, eingeschweißt oder in sonstiger Weise dauerhaft mit dem Ring 36 verbunden. Bei dem dargestellten Ausführungsbeispiel ist eine Klebezone 38 illustriert, die sich an der Unterseite des Belüftungsschlauchs 10 über etwa die Hälfte des Ringumfangs erstreckt. Allgemein ist wünschenswert, daß die Belüftungsschläuche 10 in den Halterungen von unten gehalten sind. An der Unterseite der Belüftungsschläuche 10 angebrachte Halbringe würden auch diese Funktion erfüllen, doch sind über den Umfang geschlossene Ringe 36 wegen herstellungs- und montagetechnischer Vorteile sowie aus Stabilitätsgründen bevorzugt.

Am unteren Scheitel eine jeden Rings 36 sitzt ein Läufer 40, der mit einem Schlauchbinder 22 an dem Ring 36 befestigt ist. Das Band 24 des Schlauchbinders 22 ist dazu außen um den Ring 36 geschlungen und an einer Schnalle 26 festgezogen. Zur Positionierung der Läufers 40 ist der Ring 36 mit einer Nut 28 versehen, in der der Läufer 40 sitzt. Der Läufer 40 hat einen in der Profilöffnung des Führungsprofils 14 längsbeweglich mit Spiel aufgenommenen Führungskörper 44, der über ein durch den Längsschlitz 32 hindurchragendes Verbindungsteil 46 mit dem Ring 36 verbunden ist. Der Führungskörper 44 kann aus reibungsarmem Material bestehen und in der Führungsschiene 14 gleiten oder aber auf Rollen darin laufen.

Fig. 3 und Fig. 4 zeigen alternative Ausführungen der Führungsschiene 14 als T-Träger 30 oder Rundprofil 34, auf denen jeweils ein mit der Halterung verbundener Läufer 42 längsbeweglich aufsitzt.

Die Schienenführung erlaubt es, die Schläuche 10 in die in Fig. 1 gezeigte Betriebsstellung zu ziehen. Hierzu ist für jeden Schlauch 10 ein Zugseil 48 o. a. Zugmittel vorgesehen, das an dem der Druckluftversorgung abgewandten Ende an dem Schlauch 10 angreift und die Zugkraft auf den Schlauchkörper einleitet. Bei dem dargestellten Ausführungsbeispiel ist der Schlauch mit einem Endformstück 50 verschlossen, das eine axiale Verlängerung des Schlauchs 10 bildet und in ähnlicher Weise wie die Halterungen an der Führungsschiene 14 geführt ist. Der Anschluß des Schlauchs 10 an das Endformstück 50 kann mit einer Schlauchschelle erfolgen. Das Zugseil 48 greift an einem Haken des Endformstücks 50 an, der auf Höhe der Schlauchachse liegt.

Neben der Einleitung der Zugkraft kann das Endformstück 50 eine Anschlagfunktion erfüllen und mit Einrichtungen zur Entlüftung und Entwässerung des Schlauchs 10 versehen sein.

In einen jeden Schlauch 10 sind überdies zwei Zwischenformstücke 52, 54 eingeschaltet. Es handelt sich um 135°- Winkelstücke, die in der Betriebsstellung des Belüftungsschlauchs 10 im Bereich des 90°-Bogens 20 der Führungsschiene 14 zu liegen kommen. Beide Zwischenformstücke 52, 54 sind ähnlich wie die Halterungen an der Führungsschiene 14 geführt. Das obere Zwischenformstück 52 kommt am Übergang des 90°-Bogens 20 zu dem Einlaufabschnitt 16, daß untere Zwischenformstück 54 am Übergang zu dem Horizontalabschnitt 18 der Führungsschiene 14 zu liegen.

Wie in Fig. 6 gezeigt, tragen die unteren Zwischenstücke 54 Querholme 56, die als Anschläge dienen und mit fest in dem Becken 12 angeordneten Vertikalträgern 58 als Festpunkt wirken, um die Zwischenformstücke 54 gegen die wirkende Zugkraft zu halten. Bei Erreichen der Betriebsstellung wird also der zwischen dem unteren Zwischenformstück 54 und dem Endformstück 50 liegende Schlauchabschnitt 60 gespannt. Allein dieser sich parallel zu dem Horizontalabschnitt 18 der Führungsschiene 14 erstreckende Schlauchabschnitt 60 ist durch eine Perforation als Belüftungsschlauch ausgebildet. Der Schlauchabschnitt 62 zwischen den Zwischenformstücken und der sich parallel zu dem Einlaufabschnitt 16 der Führungsschiene 14 erstreckende Schlauchabschnitt 64 sind hingegen als durchgehende Versorgungsschläuche ausgebildet, die zu einer Druckluftquelle führen.

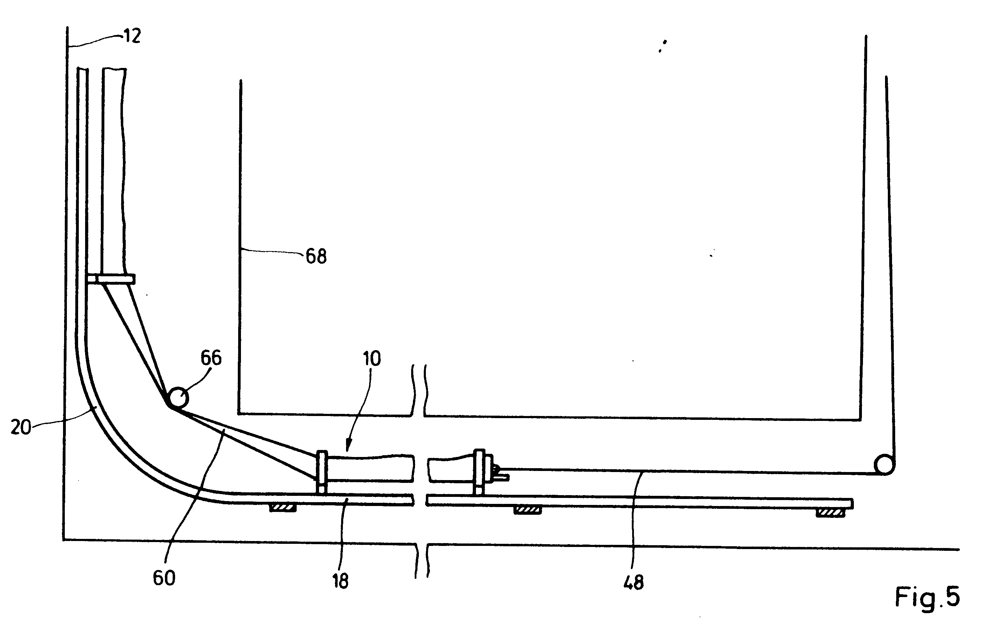

Der Abstand der Halterungen an dem Schlauch wird durch die Forderung bestimmt, daß der luftgefüllte Belüftungsschlauch 60 durch den wirkenden Auftrieb zwischen benachbarten Abstützpunkten nur eine begrenzte Verformung erfahren darf. Im Interesse der Materialersparnis und eines geringen Fertigungsaufwands ist man bemüht, mit einer geringen Zahl von Halterungen auszukommen. Im Bereich des 90°-Bogens 20 ist hingegen aus Platzgründen eine relativ scharfe Umlenkung des Schlauchs wünschenswert. Bei entsprechend großem Abstand der Halterungen hat der Schlauch 10 die Tendenz, im Bereich des Bogens 20 von der Führungsschiene 14 abzuheben. Die Erfindung sieht daher in der Bogenöffnung auf der Winkelhalbierenden zwischen Einlaufabschnitt 16 und Horizontalabschnitt 18 der Führungsschiene 14 für jeden Schlauch 10 eine dauerhaft in dem Becken 10 angeordnete Rolle 66 vor, deren Achse sich parallel zu der Krümmungsachse des Bogens 20 erstreckt. Wie in Fig. 5 illustriert, legt sich der Schlauch 10 während des Einziehens an die Rolle 66 an, die sich dem Schlauchvorschub entsprechend frei dreht und den Schlauch so dicht an der Führungsschiene 14 hält, daß Beckeneinbauten 68 problemlos unterfahren werden und stets eine ausreichende Komponente der Zugkraft in Richtung des Einlaufabschnitts 16 der Führungsschiene 14 wirkt. In der Betriebsstellung ist durch die Zwischenformstücke 52, 54 gewährleistet, daß sich der dazwischen befindliche Schlauchabschnitt 62 im Abstand von der Rolle 66 erstreckt und keine Einengung seines Querschnitts an dieser erfährt.

Die längs des horizontalen Belüftungsschlauchabschnitts 60 erfolgende Verankerung des Schlauchs an der Führungsschiene 14 mit einer an der Schlauchunterseite angreifenden Halterung ermöglicht es, den Schlauch ohne Vorspannung in dem Becken 12 zu verlegen. Die an dem Endformstück 50 eingeleitete Zugkraft muß während des Einziehens nur den Laufwiderstand der Schienenführung überwinden. Sobald das untere Zwischenformstück 54 seine Anschlagstellung erreicht hat, ist nur noch eine Haltekraft erforderlich, die die durch den Schlauchauftreb bewirkte Zugkraft kompensiert. Diese Haltekraft ist bei von unten abgefangenen Schläuchen wesentlich geringer als die bei oben abgestützten Schläuchen aufzubringende Vorspannung, da die Halte- und Führungskonstruktion für den Schlauch viel höhere Kräfte aufnehmen kann, ohne daß es zu einer Querschnittsverengung des Schlauches kommt.

Liste der Bezugszeichen

10 Schlauch
12 Becken
14 Führungsschiene
16 Einlaufabschnitt
18 Horizontalabschnitt
20 Bogen
22 Schlauchbinder
24 Band
26 Schnalle
28 Nut
30 T-Träger
32 Längsschlitz
34 Rundprofil

36 Ring

38 Klebezone

40 Läufer

42 Läufer

44 Führungskörper

46 Verbindungsteil

48 Zugseil

50 Endformstück

52 oberes Zwischenformstück

54 unteres Zwischenformstück

56 Querholm

58 Vertikalträger

60 perforierter Schlauchabschnitt

62 Schlauchabschnitt

64 Schlauchabschnitt

66 Rolle

68 Beckeneinbau


**Patentansprüche**

1. Belüftungssystem für ein flüssigkeitsgefülltes Becken, insbesondere für das Becken einer Kläranlage oder eine Intensiv-Fischmast, mit wenigstens einem Schlauch, der zumindest abschnittsweise mit einer Perforation für den Durchtritt der Luft versehen ist, mit mindestens einer in dem Becken befestigten und sich im wesentlichen horizontal erstreckenden Führungsschiene, mit einer Mehrzahl von Halterungen, die im Abstand voneinander an der Führungsschiene angeordnet sind und im Betriebszustand den Schlauch entgegen seinem Auftrieb festhalten, und mit einem Zugmittel zum Einziehen des Schlauches in das leere oder flüssigkeitsgefüllte Becken, wobei die Führungsschiene und die Halterungen zur Führung des Schlauches dienen, dadurch gekennzeichnet, daß die Halterungen an dem Schlauch (10) dauerhaft befestigt sind, daß die dauerhafte Befestigung der Halterungen an dem Schlauch zumindest in dessen unterem Bereich angeordnet ist und daß die Halterungen an der Führungsschiene (14) gleitend geführt sind.

2. Belüftungssytem nach Anspruch 1, dadurch gekennzeichnet, daß sich eine Führungsschiene (14) unterhalb des Schlauchs (10) befindet.

3. Belüftungssystem nach Anspruch 1 oder 2, dadurch gekennzeichnet, daß sich zwei Führungsschienen beidseits des Schlauchs befinden.

4. Belüftungssystem nach einem der Ansprüche 1 bis 3, dadurch gekennzeichnet, daß die oder eine jede Führungsschiene (14) ein Hohlprofil mit einem in Schienenlängsrichtung verlaufenden Schlitz (32) aufweist, und daß die Halterungen über ein durch den Schlitz (32) hindurchragendes Verbindungsteil (46) mit einem in der Profilöffnung des Hohlprofils längsbeweglich aufgenommenen Läufer (40) (Gleiter oder Rolle) verbunden sind.

5. Belüftungssystem nach einem der Ansprüche 1 bis 4, dadurch gekennzeichnet, daß die oder eine jede Führungsschiene (14) ein T-Profil (30) oder Rundprofil (34) aufweist, und daß die Halterungen mit einem längsbeweglich darauf sitzenden Läufer (42) verbunden sind.

6. Belüftungssystem nach einem der Ansprüche 1 bis 5, dadurch gekennzeichnet, daß die Halterungen Ringe (36) sind, in die der Schlauch (10) mit seiner Unterseite eingeklebt oder eingeschweißt sind.

7. Belüftungssystem nach einem der Ansprüche 1 bis 6, dadurch gekennzeichnet, daß ein Ende des Schlauchs (10) mit einem vorzugsweise an der Führungsschiene (14) geführten Endformstück (50) verbunden ist, an dem das Zugmittel (48) auf Höhe der Schlauchachse angreift.

8. Belüftungssystem nach einem der Ansprüche 1 bis 7, dadurch gekennzeichnet, daß in einem Krümmungsbereich der Schlauchbahn wenigstens ein zusätzliches Führungselement (66) angeordnet ist, gegen das sich der Schlauch beim Einziehen anlegt.

9. Belüftungssystem nach einem der Ansprüche 1 bis 8, dadurch gekennzeichnet, daß die Führungsschiene (14) einen mit Gefälle verlegten Einlaufabschnitt (16) hat, der über einen Bogen (20) in einen Horizontalabschnitt (18) übergeht, und daß sich ein zusätzliches Führungselement (66) vor diesem Bogen (20) befindet.

10. Belüftungssystem nach einem der Ansprüche 1 bis 9, dadurch gekennzeichnet, daß als zusätzliches Führungselement eine Rolle (66) vorgesehen ist.

11. Belüftungssystem nach einem der Ansprüche 1 bis 10, dadurch gekennzeichnet, daß zwischen Abschnitten (60, 62, 64) des Schlauchs (10) wenigstens ein in der Schlauchbahn liegendes, vorzugsweise an der Führungsschiene (14) geführtes Zwischenformstück (52, 54) insbesondere in Form eines Winkelstücks oder Bogens eingeschaltet ist.

12. Belüftungssystem nach einem der Ansprüche 1 bis 11, dadurch gekennzeichnet, daß der Einlaufabschnitt (16) und der Horizontalabschnitt (18) der Führungsschiene (14) gerade sind und über einen Bogen (20) ineinander übergehen, in dessen Bereich sich bei eingezogenem Schlauch (10) an der Führungsschiene (14) geführte Zwischenformstücke (52, 54) befinden.

13. Belüftungssystem nach einem der Ansprüche 1 bis 12, dadurch gekennzeichnet, daß an einem unteren Zwischenformstück (54) ein Anschlag (56) angebracht ist, der mit einem stationären Gegenanschlag (58) als Festpunkt wirkt, und daß das an dem Schlauch (10) angreifende Zugmittel (48) ebenfalls Festpunkt ist.

14. Belüftungssystem nach einem der Ansprüche 1 bis 13, dadurch gekennzeichnet, daß allein der Schlauchabschnitt (60) zwischen dem unteren Zwischenformstück (54) und dem Endformstück (50) perforiert ist.

15. Belüftungssystem nach einem der Ansprüche 1 bis 14, gekennzeichnet durch eine Anordnung mehrerer, vorzugsweise paralleler Führungsschienen (14) und daran geführter Schläuche (10), die jeweils mit einem Zugmittel (48) verbunden sind.

## Claims

1. Ventilation system for a liquid-filled basin, in particular for the basin of a purification plant or for intensive fish fattening with at least one hose which is provided at least partially with a perforation for the penetration of air, with at least one guide rail attached in the basin running in a generally horizontal direction, with a majority of holding devices which are arranged at a distance from one another along the guide rail and in the operational mode hold the hose against its buoyancy, and with a traction device for the pull-in of the hose into the empty or liquid-filled basin, whereby the guide rail and the holding devices serve to guide the hose, characterized in that the holding devices are permanently attached to the hose (10), that the permanent attachment of the holding devices on the hose is effected at least on its lower portion and that the holding devices are guided slidingly moveable along the guide rail (14);

2. Ventilation system according to claim 1, characterized in that a guide rail (14) is located below the hose (10).

3. Ventilation system according to claim 1 or 2 characterized in that two guide rails are located on either side of the hose,

4. Ventilation system according to one of claims 1 to 3, characterized in that the guide rail (14) or each one of them comprises a hollow profile with a slit (32) extending in longitudinal direction of the rail, and that the holding devices are attached by a joining piece (46) projecting through the slit (32) to a slide (40) (glider or roller) moveable lengthwise in the opening of the hollow profile.

5. Ventilation system according to one of claims 1 to 4, characterized in that the guide rail (14) or each one of them comprises a T-profile (30) or round profile (34) and in that the holding devices are connected with a lengthwise moveable slide (42) located on top of the profile.

6. Ventilation system according to one of claims 1 to 5, characterized in that the holding devices are rings (36) into which the underside of the hose (10) is glued or welded.

7. Ventilation system according to one of claims 1 to 6, characterized in that one end of the hose (10) is connected to an end formed piece (50), preferably running along the guide rail (14), onto which the traction mechanism (48) engages at the lebel of the hose axis.

8. Ventilation system according to one of claims 1 to 7, characterized in that in a curved section of the path of the hose at least one additional guide element (66) is arranged, against which the hose lays when pulled in.

9. Ventilation system according to one of claims 1 to 8, characterized in that the guide rail (14) has an intake section (16) with a descending gradient which leads into a horizontal section (18) over an arc (20), and in that an additional guide element (66) is located in front of this arc (20).

10. Ventilation system according to one of claims 1 to 9, characterized in that a pulley (66) is provided as an additional guide element.

11. Ventilation system according to one of claims 1 to 10, characterized in that between sections (60, 62, 64) of the hose (10) at least one intermediate formed piece (52, 54), in particular in the form of an elbow joint or arc, is inserted in the path of the hose, said intermediate formed piece (52, 54) being preferably guided along the guide rail (14).

12. Ventilation system according to one of claims 1 to 11, characterized in that the intake section (16) and the horizontal section (18) of the guide rail (14) are straight and connected by an arc (20) in whose vicinity are located intermediate formed pieces (52, 54) guided along the guide rail (14) when the hose is pulled in.

13. Ventilation system according to one of claims 1 to 12, characterized in that on one lower intermediate formed pieces (54) a stop (56) is attached, which acts as a fixed point together with a stationary counterstop (58), and in that the traction mechanism (48) which engages the hose (10) is also a fixed point.

14. Ventilation system according to one of claims 1 to 13, characterized in that only the section of hose (60) between the lower intermediate formed piece (54) and the end formed piece (50) is perforated.

15. Ventilation system according to one of claims 1 to 14, characterized by an arrangement of several preferably parallel guide rails (14) and hoses (10) running along the same, each of the hoses being connected to a traction mechanism (48).

**Revendications**

1. Système d'aération d'une cuve remplie de liquide, en particulier du bassin d'une installation de clarification ou d'un élevage intensif de poissons, comprenant au moins un flexible qui est pourvu au moins par tronçons d'une perforation pour le passage de l'air, au moins un rail de guidage qui est fixé dans le bassin et qui s'étend sensiblement horizontalement, plusieurs fixations qui sont agencées à distance l'une de l'autre sur le rail de guidage et qui retiennent le flexible à l'état de service contre sa poussée ascensionnelle, et un moyen de traction pour introduire le flexible dans le bassin vide ou rempli de liquide, le rail de guidage et les fixations servant au guidage du flexible, caractérisé en ce que les fixations sont fixées de manière permanente sur le flexible (10), en ce que la fixation permanente des fixations sur le flexible est agencée au moins dans la zone inférieure de celui-ci et en ce que les fixations sont guidées de manière à glisser sur le rail de guidage ( 14).

2. Système d'aération suivant la revendication 1, caractérisé en ce qu'un rail de guidage (14) se trouve en dessous du flexible (10).

3. Système d'aération suivant l'une des revendications 1 et 2, caractérisé en ce que deux rails de guidage se trouvent de part et d'autre du flexible.

4. Système d'aération suivant l'une des revendications 1 à 3, caractérisé en ce que le ou un quelconque rail de guidage (14) présente un profil creux pourvu d'une fente (32) qui s'étend suivant la direction longitudinale du rail et en ce que les fixations sont, par l'intermédiaire d'une pièce de liaison (46) faisant saillie à travers la fente (32), reliées à un curseur (40) (élément de glissement ou galet) qui est logé dans l'ouverture du profilé creux de manière à pouvoir se déplacer longitudinalement.

5. Système d'aération suivant l'une des revendications 1 à 4, caractérisé en ce que le ou un quelconque rail de guidage (14) présente un profil en T (30) ou un profil à section circulaire (34) et en ce que les fixations sont reliées à un curseur (42) reposant sur ceux-ci de manière à pouvoir être déplacé longitudinalement.

6. Système d'aération suivant l'une des revendications 1 à 5, caractérisé en ce que les fixations sont des anneaux (36) dans lesquels le flexible (10) est collé ou soudé par son côté inférieur.

7. Système d'aération suivant l'une des revendications 1 à 6, caractérisé en ce qu'une extrémité du flexible (10) est reliée à une pièce façonnée d'extrémité (50) qui est de préférence guidée sur le rail de guidage (14) et sur laquelle agit le moyen de traction (48) à hauteur de l'axe du flexible.

8. Système d'aération suivant l'une des revendications 1 à 7, caractérisé en ce que, dans une zone de courbure du parcours du flexible, est agencé au moins un élément de guidage supplémentaire (66) contre lequel le flexible est en appui lors de l'introduction.

9. Système d'aération suivant l'une des revendications 1 à 8, caractérisé en ce que le rail de guidage (14) a une section d'entrée (16) qui est posée avec une pente et qui se transforme par l'intermédiaire d'un arc (20) en une section horizontale (18) et en ce qu'un élément de guidage supplémentaire (66) se trouve devant cet arc (20).

10. Système d'aération suivant l'une des revendications 1 à 9, caractérisé en ce qu'un galet (66) est prévu comme élément de guidage supplémentaire.

11. Système d'aération suivant l'une des revendications 1 à 10, caractérisé en ce qu'entre des tronçons (60, 62, 64) du flexible (10), au moins une pièce façonnée intermédiaire (52, 54) située dans la trajectoire du flexible, de préférence guidée sur le rail de guidage (14), est montée en particulier sous la forme d'une pièce angulaire ou d'un arc.

12. Système d'aération suivant l'une des revendications 1 à 11, caractérisé en ce que la section d'entrée (16) et l'une des revendication horizontale (18) du rail de guidage (14) sont rectilignes et se transforment l'une dans l'autre par l'intermédiaire d'un arc (20) dans la zone duquel se trouvent des pièces façonnées intermédiaires (52, 54) guidées sur le rail de guidage (14), lorsque le flexible (10) est introduit.

13. Système d'aération suivant l'une des revendications 1 à 12, caractérisé en ce que, sur une pièce façonnée intermédiaire inférieure (54), est agencée une butée (56) qui agit comme point fixe avec une contre-butée stationnaire (58) et en ce que le moyen de traction (48) agissant sur le flexible (10) est également un point fixe.

14. Système d'aération suivant l'une des revendications 1 à 13, caractérisé en ce que seul le tronçon de flexible (60) situé entre la pièce façonnée intermédiaire inférieure (54) et la pièce façonnée d'extrémité (50) est perforé.

15. Système d'aération suivant l'une des revendications 1 à 14, caractérisé par un agencement de plusieurs rails de guidage (14), de préférence parallèles, et de flexibles (10) qui sont guidés dessus et qui sont chacun reliés à un moyen de traction (48).

Fig.1

Fig.2

Fig.3

Fig.4

Fig.5

EP 0 380 738 B1

Fig. 6

EP 0 380 738 B1